Europäisches Patentamt

European Patent Office

Office européen des brevets

(11) Publication number: **0 039 204**
**B1**

# EUROPEAN PATENT SPECIFICATION

(45) Date of publication of patent specification: **03.04.85**

(21) Application number: **81301788.6**

(22) Date of filing: **23.04.81**

(51) Int. Cl.⁴: **B 01 F 3/04, C 02 F 7/00**

(54) Devices for the gasification of liquids and liquid treatment plants including said devices.

(30) Priority: **29.04.80 GB 8014056**
**27.05.80 GB 8017374**

(43) Date of publication of application:
**04.11.81 Bulletin 81/44**

(45) Publication of the grant of the patent:
**03.04.85 Bulletin 85/14**

(84) Designated Contracting States:
**AT DE IT NL SE**

(56) References cited:
**DE-A-2 210 185**
**GB-A-1 482 191**
**US-A-3 336 016**
**US-A-3 797 809**

(73) Proprietor: **VENTURATOR LIMITED**
**129 High Street**
**Guildford Surrey (GB)**

(72) Inventor: **Todd, John James**
**11 Overbrook**
**West Horsley Surrey (GB)**

(74) Representative: **Wood, Anthony Charles et al**
**c/o MICHAEL BURNSIDE & PARTNERS**
**2 Serjeants' Inn Fleet Street**
**London EC4Y 1HL (GB)**

Courier Press, Leamington Spa, England.

## Description

This invention relates to devices for the treatment of liquid media by gasification. One application of such devices is in the aeration or oxygenation of sewage or other waste water, for example in an oxidation ditch sewage treatment plant, and another application is in the aeration or oxygenation of the water in fish or eel farms or the like.

British Patent No. 1,482,191 discloses a device for the gasification of liquids which comprises a hollow ring member having a central liquid passageway and a gas inlet. A portion of the surface facing the passageway is apertured so that in operation the gas passes from the hollow into liquid in the passageway. The cross-section of the liquid passageway progressively increases away from the apertured area. British Registered Design No. 987,313 shows a particular form of the device that has proved effective in practical use.

Such devices are usually weighted, suitably by concrete introduced through the gas inlet to set in the lower portion of the hollow, and are then suspended, e.g. by chains, in a liquid to be treated so that the liquid passageway of the device has its longitudinal axis substantially vertical. In operation, the gas forms bubbles on passing through the apertures into liquid in the passageway, the bubbles rising through the liquid to induce a flow of liquid upwardly through the passageway. The induced liquid flow passing the apertures exerts a shearing effect on the gas bubbles as they leave the ring member thereby producing smaller gas bubbles and in consequence increasing the overall gas/liquid interface area for a given volume of gas, and thus increasing the rate of gas-to-liquid transfer.

Such devices have been found to be highly effective in practical use, particularly for aeration of waste water containing aerobically degradable organic matter, for example sewage. Such devices achieve a high rate of gas transfer into solution with low energy requirements and are also highly effective in setting up and maintaining a strong circulation pattern in the body of liquid being treated.

The devices have a generally circular symmetry about their vertical axis and thus drive a circulation pattern which also has a generally circular symmetry about said axis. In a treatment plant a number of the devices can be disposed in a pattern in a horizontal plane so that each treats an optimum size body of water without significantly interfering with the circulation patterns created by adjacent devices. Such plants may operate on a continuous or intermittent flow basis, but in either case arrangements are necessary to cause the water to be treated to flow through the treatment plant.

US—A—3336016 relates to the aeration of sewage in a tank and an object thereof is to lengthen the time of dwell of the air introduced into the sewage which is to be purified and to achieve an intensive horizontal movement and mixing of the sewage-sludge mixture in the tank. Apparatus for that purpose includes air supply tubes and guide walls inclined to deflect the sewage-sludge mixture during aeration in the direction of flow of the sewage. In one embodiment the aeration apparatus includes connecting walls between the guide walls to form an S-shaped flow duct within the body of liquid to be aerated.

An object of the present invention is to provide an efficient and effective solution to the need to cause the water to be treated to flow through the treatment plant.

GB—A—1482191, referred to above, discloses a device for the gasification of liquids comprising a hollow annular member bounding a central liquid flow passageway, said member having a gas inlet into said hollow and a plurality of apertures surrounding said passageway to permit introduction of gas from said hollow into liquid flowing in use up through said passageway to form gas bubbles in said liquid.

The present invention provides such apparatus characterised by flow diverter means associated with the upper end of said passageway to impart in use a horizontal component of velocity to the gasified liquid flow, and by flow blocking means associated with the lower end of the passageway to tend to reduce the volumetric inflow rate from the direction of said horizontal component of velocity.

In a preferred form, the hollow annular member is elongated laterally so that the passageway is elongate in cross-section. The elongation preferably extends generally perpendicular to the direction of said horizontal component of velocity. The passageway may be generally elliptical in cross-section or generally rectangular with or without rounded ends, and the elongation may be of such extent that the passageway becomes slit-like in configuration.

It will be appreciated that in use the devices according to the invention will tend to cause a bodily movement of the water being treated in a horizontal direction past the devices. The invention also provides a treatment vessel having one or more such devices disposed therein, the or each said device being arranged in a predetermined orientation relative to the vessel. The devices need not be in the same orientation as one another. The predetermined orientation may be such as to tend to move the liquid progressively through the volumes of influence of successive devices. A fish farm vessel, for example, may be arranged to provide an extensive water movement path, e.g. to simulate river conditions for trout, and in such embodiment the devices may all be arranged to tend to move the water bodily in the same direction along said path, which may be closed. Where laterally elongate devices are used, they are disposed in a flow path or flow channel so that the elongation extends transversely of the flow path or channel. This finds particular application in oxidation ditch sewage treatment plants as explained hereinafter.

The flow diverter means may be arranged to impart a relatively small horizontal component of velocity, e.g. where a relatively gentle bodily flow is required in one treatment section of a sewage treatment plant. In another embodiment the flow diverter means may take a more substantial form, e.g. of a substantial curved hood extending up and over 50% or more of the top plan view of the device so as to impart a substantial horizontal component of velocity. That form may be used in a fish farm vessel where the water may be fairly shallow and a significant overall flow rate around a closed path may be required.

In some embodiments. e.g. the last-mentioned, the horizontal jet thrust of the diverted flow may require other support arrangements than weighting together with suspension chains. For example weighting together with chain suspension having suspension points adjacent to said flow diverter may suffice. Alternatively the weighting may be wholly or partially dispensed with and the device secured or held in position by struts or pipework extending from the sides or base of a treatment vessel.

The flow diverter means may be formed integrally with the device, which in practice has taken the form of a plastics material moulding. Alternatively the flow diverter may be in the form of a separately made baffle, cowl, hood, or sleeve adapted to engage the upper portion of the hollow annular member. Such separate diverter may be adapted to be permanently or releasably secured to the device, or may be adapted to be located in position in a treatment tank, e.g. by struts or pipework extending from the sides or base of the vessel, the hollow annular member being itself of less overall density than water and being trapped in position beneath the diverter member in use. An advantage of forming the flow diverter separately is that they can be used with otherwise standard vertical flow gasification devices.

An embodiment of the invention will now be described, by way of example, with reference to the accompanying drawings, in which:

Figure 1 is a vertical section through a device according to the invention;

Figure 2 is an underneath plan view of the device of Figure 1;

Figure 3 is a top plan view of a liquid treatment plant according to the invention; and

Figure 4 is a vertical section through another embodiment of the device.

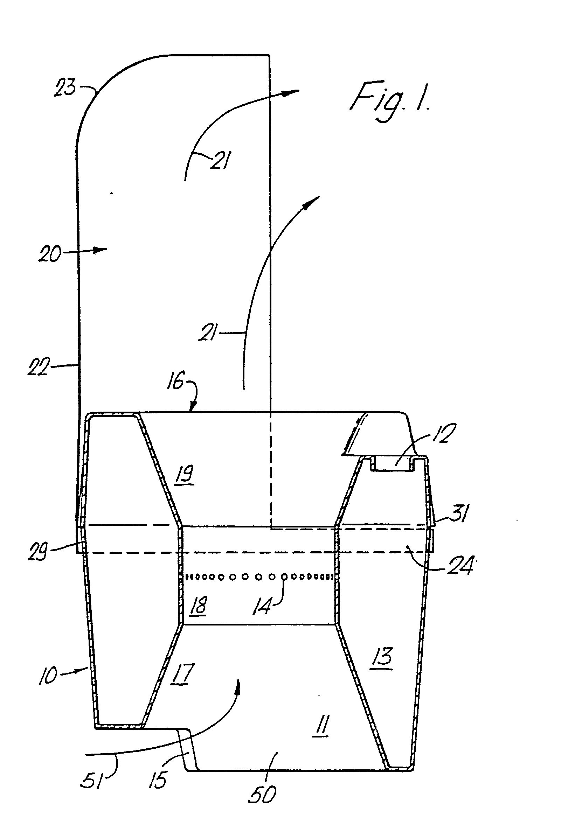

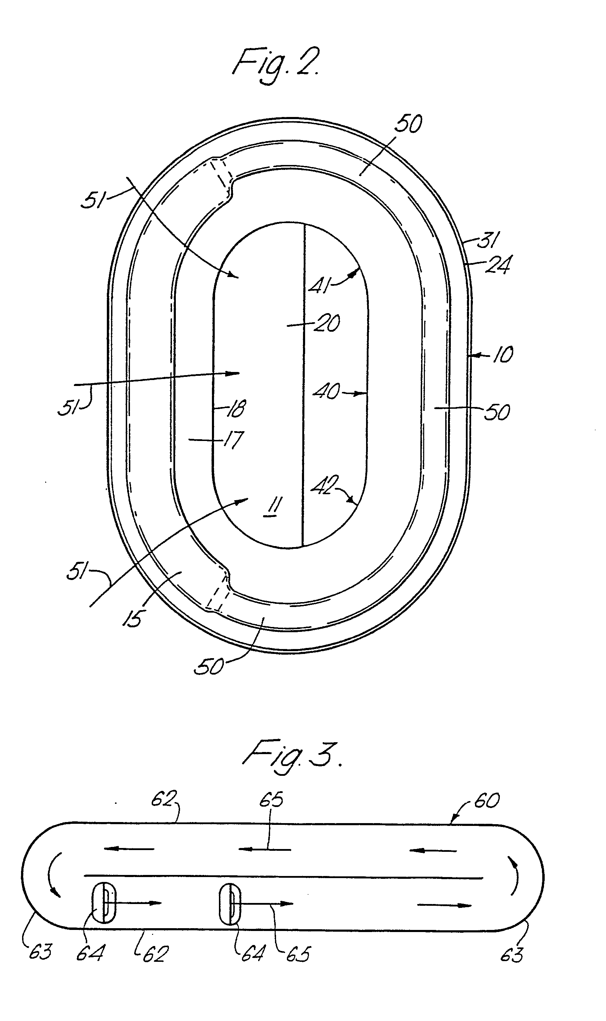

Referring to Figures 1 and 2 there is shown a gasification device comprising a hollow annular member 10 bounding a central liquid passageway 11. The member has a gas inlet 12 into the hollow 13 and a row of apertures 14 surrounding the passageway 11. The passageway has a lower inlet 15 and an upper outlet 16, and comprises a lower convergent portion 17, an intermediate throat portion 18 and an upper divergent portion 19. The apertures 14 and provided substantially centrally of said throat portion 18. The apertures 14 are preferably provided in a single row, are similar to one another and are regularly spaced. They may be 6 millimetres in diameter. The member has a waist 29 defined by a circumferentially extending overhang 31 at the point of maximum diameter at about two-thirds of the height of the member. The outer surface of the member tapers inwardly both above and below the overhang 31 to facilitate moulding.

A flow diverter means 20 is associated with the upper end of said passageway to impart in use a horizontal component of velocity to the gasified liquid flow, as illustrated by arrow 21. The diverter may take various forms, e.g. a baffle, cowl, hood or sleeve in accordance with the criteria and applications discussed above. In the illustrated embodiment the diverter is a baffle or cowl having a lower portion 22 extending vertically upward from the member 10 and of the same curvature in plan view, and an upper portion 23 curved in three dimensions. The illustrated diverter 20 is detachably secured to the member 10 by virtue of the lower portion 22 extending downwardly to a band portion 24 that encircles the waist 29 and engages circumferentially beneath the overhang 31. Other arrangements may be used as described above. In one particular alternative the upper portion 23 may extend substantially wholly across the flow path when viewed in top plan view, and the lower portion 22 may be in the form of a sleeve, circumferentially continuous in top plan view. This would form an arrangement somewhat resembling ship deck ventilator outlets.

The member 10 is elongated transversely as best seen in Figure 2 so that the passageway 11 is generally elliptical in cross-section. For convenience of manufacture the cross-section may actually comprise a central parallel-sided portion 40 and two semi-circular end portions 41, 42. The same cross-section is reflected in the other dimensions of the member 10 when viewed in underneath plan view.

Flow blocking means 50 is associated with the lower end of the passageway 11 to tend to reduce the volumetric inflow rate from the direction of said horizontal component of velocity. Inflow is thus drawn preferentially from the side opposite the blocking means 50 as shown by arrow 51. The blocking means 50 again reflects the cross-section of the member 10 when viewed in plan, and extends around rather more than 50% of the base circumference. In one application the device will in use be placed, or held down, on the base of a treatment vessel. The blocking means 50 then also serves as a foot and a spacer, so that the effective inflow cross-sectional area is generally equal to or rather larger than the cross-sectional flow area of the throat 18. A floor scouring action may ensue which is desirable in some applications in which anaerobic waste matter can build up on the floor of a treatment tank.

In the illustrated embodiment it will be noted that the transverse elongation of the member 10 and the major axis of the generally elliptical cross-section of the passageway 11 extend generally perpendicular to the direction of said horizontal component of velocity illustrated by the arrows 21 and 51.

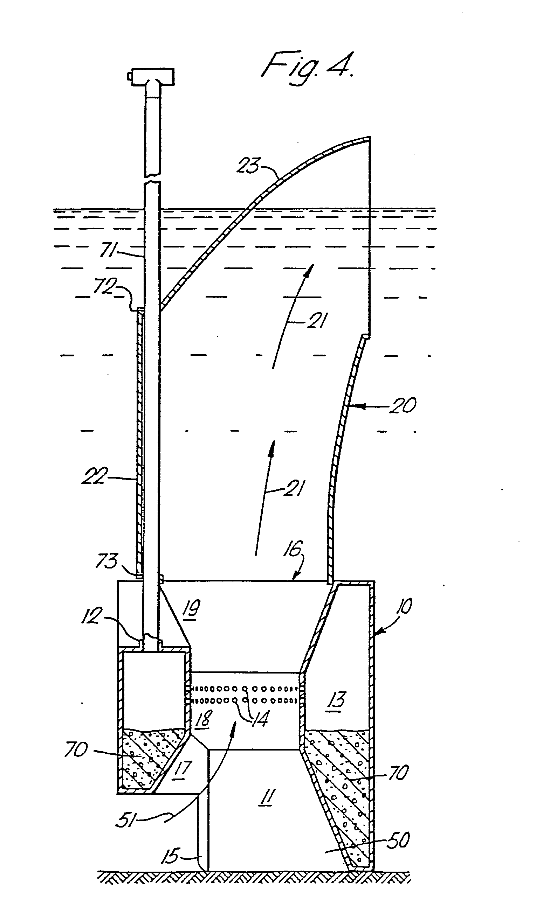

Figure 3 is a schematic top plan view of a liquid treatment plant according to the invention. The plant comprises a treatment vessel 60 defining a closed circuit liquid flow channel in the form of two straight parallel sections 62 joined by curved end sections 63. A plurality, e.g. two are illustrated, of devices 64 of the kind described in detail in relation to Figures 1 and 2, are disposed in the flow channel and create the flow therealong. The flow diverter means 20 of the devices are on the same sides thereof and thus are oriented to impart in use the horizontal component of velocity generally along the direction of said flow channel as shown by arrows 65.

The plant shown in Figure 3 may be a fish or eel farm plant as described above. Alternatively, the plant — normally on a larger scale — may be an oxidation ditch sewage treatment plant. An oxidation ditch is a well-established form of sewage treatment plant and comprises a closed circuit flow channel about 1 to 1.5 metres deep conveniently forming a generally oval circuit of uniform width in plan. It is normally constructed by excavation in the ground. Aeration is conventionally provided by means of brush aerators, i.e. devices that mechanically disturb the upper layer of the waste water and which by their action also serve to maintain a velocity of flow around the ditch of about 0.3 metres per second which is generally sufficient to keep the activated sludge flocs in suspension.

Where the ditch is designed for continuous operation, provision is required for settlement of the sludge before discharge of the final effluent. In conventional oxidation ditch plants, separate settlement tanks are usually used, but more recently oxidation ditch plants have been installed including integral settlement sections. The latter is effectively embodied by the portion of the continuous channel which is substantially immediately upstream of the aerator, i.e. the portion that is therefore also most downstream from the aerator where the flow is least disturbed and settlement automatically tends to take place.

Mechanical brush aerators are of proven effectiveness but have substantial maintenance requirements and, being substantial mechanical arrangements, suffer from lack of flexibility in operation and positioning. Moreover the aeration is introduced in the upper layers of the waste water being treated.

Where laterally elongate devices 64 are used, they are disposed in the flow channel 62 so that the elongation extends transversely of the flow channel. In one form the device is dimensioned to extend substantially completely across the flow channel of the oxidation ditch. Oxidation ditch flow channels are conveniently from 1 to 5 metres in width. In another form two or more devices may be provided side by side so as jointly to span the channel width.

One or more devices may be provided at one point in the flow path circuit or at each of two or more stations spaced out along the flow path. In a larger plant several such stations may be desirable and may be equally or unequally spaced. Where the plant includes an integral settlement section, the stations will be relatively concentrated in one portion of the flow path length — as shown in Fig. 3 — to leave a relatively long portion for quiet flow and settlement.

The use of these devices provides for a degree of flexibility of positioning and numbers of devices, both initially and during subsequent plant operation, that cannot at present be achieved by mechanical brush aerator systems with their requirement for substantial support and drive machinery. The present devices require in use only relatively simple passive support arrangements and air supply hoses.

In operation the gasification devices provide aeration and also tend to cause a bodily movement of the water being treated in a horizontal direction past the devices along the direction of said flow channels. Moreover the flow diverter means of the or each device is associated with the upper end of said passageway and thus the discharged aerated flow is generally in the upper layer of the waste water. Correspondingly the intake to the or each device is at the lower end of said passageway and thus comes from the lower layer of the waste water. Where a said flow blocking means is associated with the lower end of the passageway the flow intake will also be preferentially or substantially wholly from the lower layer of the waste water upstream of the device.

The above combination of features serves to reduce any tendency for undesirable build-up of untreated or yet insufficiently treated solid waste matter in potentially anaerobic masses on the floor of the ditch. Where a spaced succession of devices are used along a section of the ditch immediately downstream from the raw waste water inlet, the devices thus serve to tend to repetitively lift solids to the upper layers for effective mixing and aeration.

The oxidation ditch may be constructed by excavation in the ground, or may be above ground or is preferably half above and half below ground. The walls may be of glass reinforced concrete and may be lined with plastics material to give a smooth flow channel. The walls may be vertical or inclined upwardly and outwardly. In plan view — as shown in Fig. 3 — the ditch may comprise two straight side portions connected by two generally rounded end portions.

Figure 4 shows a further embodiment of the device and similar reference numerals are used for similar parts from Fig. 1. This device is weighted at 70 and is held in position by a rigid air supply conduit 71 extending vertically and connected to the gas inlet 12 of the device. The conduit can then also serve as a convenient support for the flow diverter. In one such form the flow diverter has apertures 72, 73 which receive the conduit, and the flow diverter can be slid down the conduit to an adjusted working position usually with its base in engagement with the top of the device.

## Claims

1. A device for the gasification of liquids comprising a hollow annular member (10) bounding a central liquid flow passageway (11), said member having a gas inlet (12) into said hollow and a plurality of apertures (14) surrounding said passageway to permit introduction of gas from said hollow into liquid flowing in use up through said passageway to form gas bubbles in said liquid, characterised in that flow diverter means (20) is associated with the upper end of said passageway to impart in use a horizontal component of velocity to the gasified liquid flow, and in that flow blocking means (50) is associated with the lower end of the passageway (11) to tend to reduce the volumetric inflow rate from the direction of said horizontal component of velocity.

2. A device according to claim 1 characterised in that the hollow annular member (10) is elongate laterally so that said passageway (11) is elongate in cross-section.

3. A device according to claim 2 characterised in that said elongation extends generally perpendicular to the direction of said horizontal component of velocity.

4. A device according to any one of claims 1 to 3 characterised in that said flow diverter means (20) comprises a curved hood extending up and over 50% or more of the top plan view of the device.

5. A liquid treatment plant characterised by a treatment vessel (60) and one or more devices (64) according to any one of claims 1 to 4 disposed within said vessel in a predetermined orientation relative to said vessel.

6. A plant according to claim 5 characterised by a plurality of said devices (64) disposed in orientations to tend in use to move liquid being treated progressively through the volumes of influence of successive said devices.

7. A plant according to claim 5 or claim 6 characterised in that said vessel (60) defines a closed circuit liquid flow channel, and wherein said flow diverter means (20) of the or each said device (64) is oriented to impart in use said horizontal component of velocity generally along the direction of said flow channel.

8. A plant according to claim 7 characterised in that said hollow annular member (10) of the or each said device (64) is elongate laterally so that said passageway (11) is elongate in cross-section, and wherein said elongation extends generally perpendicular so said flow channel.

9. A plant according to claim 7 or claim 8 characterised in that a plurality of said devices (64) are relatively concentrated in one portion of the flow path length to leave a relatively long portion as an integral settlement section for quiet flow and settlement.

## Revendications

1. Un dispositif pour la gazéification de liquides, comprenant un corps annulaire creux (10) définissant un passage central (11) pour le courant de liquide, le dit corps présentant une entrée (12) de gaz dans la dite partie creuse ainsi qu'un ensemble d'ouvertures (14) entourant le dit passage pour permettre l'introduction de gaz, à partir de la dite partie creuse, dans le liquide qui, en fonctionnement, circule vers le haut à travers le dit passage de façon à former des bulles de gaz dans le dit liquide, caractérisé en ce que des moyens (20) de déviation du courant sont adaptés à l'extrémité supérieure du dit passage pour appliquer une composante horizontale de vitesse au courant de liquide gazéifié, et en ce que des moyens (50) d'arrêt du courant sont adaptés à l'extrémité inférieure du passage (11) pour tenter de réduire le débit volumétrique d'entrée provenant de la direction de cette composante horizontale de vitesse.

2. Un dispositif suivant la revendication 1, caractérisé en ce que le corps annulaire creux (10) est latéralement allongé de sorte que le dit passage (11) présente une section transversale allongée.

3. Un dispositif suivant la revendication 2, caractérisé en ce que le dit allongement s'étend dans une direction généralement perpendiculaire à la direction de la dite composante horizontale de vitesse.

4. Un dispositif suivant l'une ou l'autre des revendications 1 à 3, caractérisé en ce que les dits moyens (20) de déviation du courant comprennent une hotte incurvée s'étendant vers le haut et au-dessus de 50%, ou davantage, de la projection en plan de l'appareil.

5. Une installation de traitement de liquide, caractérisée par une cuve de traitement (60) et par un ou plusieurs appareils (64) suivant l'une ou l'autre des revendications 1 à 4 disposés à l'intérieur de la dite cuve dans une orientation prédéterminée par rapport à la dite cuve.

6. Une installation suivant la revendication 5, caractérisée par un ensemble de dits appareils (64) disposés dans des orientations qui, en fonctionnement, tendent à déplacer le liquide traité progressivement à travers les zones volumiques d'influence des dits appareils successifs.

7. Une installation suivant l'une ou l'autre des revendications 5 et 6, caractérisée en ce que la dite cuve (60) définit un canal d'écoulement de liquide en circuit fermé, et dans lequel les dits moyens (20) de déviation du courant du ou de chaque appareil (64) sont orientés de façon à appliquer, en fonctionnement, la dite composante horizontale de vitesse dans une direction généralement parallèle à la direction du dit canal d'écoulement.

8. Une installation suivant la revendication 7, caractérisée en ce que le dit corps annulaire creux (10) du ou de chaque appareil (64) est latéralement allongé de sorte que le dit passage (11) présente une section transversale allongée, et dans lequel le dit allongement s'étend dans une direction généralement perpendiculaire au dit canal d'écoulement.

9. Une installation suivant l'une ou l'autre des revendications 7 et 8, caractérisée en ce qu'un ensemble de dits appareils (64) sont relativement concentrés dans une portion de la longueur du trajet du courant afin de laisser une portion relativement longue comme section de décantation intégrale pour un écoulement calme et la décantation.

**Patentansprüche**

1. Vorrichtung zum Begasen von Flüssigkeiten mit einem ringförmigen Hohlkörper, welcher einen zentralen Flüssigkeitsströmungsdurchlass umgibt, wobei der Hohlkörper einen ins Innere des Hohlkörpers führenden Gaseinlass und mehrere den Flüssigkeitsströmungsdurchlass umgebende Öffnungen besitzt, wodurch Gas aus dem Hohlkörper in den diesen Durchlass passierenden Flüssigkeitsstrom unter Bildung von Gasblasen in die Flüssigkeit eintritt.

Dadurch gekennzeichnet, daß am oberen Ende des Flüssigkeitsströmungsdurchlasses (11) eine Einrichtung (20) zum Umlenken der Strömung unter Bildung einer horizontalen Geschwindigkeitskomponente des begasten Flüssigkeitsstromes angeordnet ist, und daß am unteren Ende des Durchlasses (11) eine Strömungsbarriere (50) vorgesehen ist, welche die Einflußmenge der Strömung mit horizontaler Geschwindigkeitskomponente verringert.

2. Vorrichtung nach Anspruch 1 dadurch gekennzeichnet, daß der Hohlkörper (10) seitlich eine Verlängerung aufweist, und daß der Durchlass (11) im Querschnitt vergrößert ist.

3. Vorrichtung nach Anspruch 2 dadurch gekennzeichnet, daß sich diese Verlängerung im wesentlichen senkrecht zur Richtung der horizontalen Geschwindigkeitskomponente erstreckt.

4. Vorrichtung nach einem der Ansprüche 1—3 dadurch gekennzeichnet, daß die Einrichtung zum Umlenken der Strömung (20) eine gekrümmte Haube (23) aufweist, welche bis 50% oder über 50% oder mehr der oberen Projektionsfläche der Vorrichtung (64) einnimmt.

5. Flüssigkeitsaufbereitungsanlage dadurch gekennzeichnet, daß ein Behandlungsbehälter (60) eine oder mehrere Vorrichtungen (64) nach den Ansprüchen 1—4 aufweist, wobei diese Vorrichtungen in einer vorbestimmten Orientierung relativ zum Behandlungsbehälter angeordnet sind.

6. Anlage nach Anspruch 5 dadurch gekennzeichnet, daß mehrere Vorrichtungen (64) derart angeordnet sind, daß Flüssigkeit, welche zunehmend in den aufeinanderfolgenden Begassungsbereichen behandelt wird, bewegt wird.

7. Anlage nach Anspruch 5 oder 6 dadurch gekennzeichnet, daß der Behandlungsbehälter (60) einen geschlossenen ringförmigen Flüssigkeitsströmungskanal aufweist, und daß darin die Einrichtung zum Umlenken der Strömung (20) jede einzelne Vorrichtung (64) derart angeordnet ist, daß die horizontale Geschwindigkeitskomponente im wesentlichen entlang des Flüssigkeitsstromkanals liegt.

8. Anlage nach Anspruch 7 dadurch gekennzeichnet, daß der Hohlkörper (10) jeder einzelnen Vorrichtung seitlich derart verlängert ist, daß der Querschnitt des Durchlasses (11) vergrößert ist und darin im wesentlichen senkrecht zum Strömungskanal verläuft.

9. Anlage nach Anspruch 7 oder 8 dadurch gekennzeichnet, daß in einem Abschnitt der Strömungsweglänge mehrere Vorrichtungen (64) konzentrierter angeordnet sind, und daß ein relativ längerer Strömungsabschnitt mit ein Absetzen ermöglichender Strömung als ein integraler Setzabschnitt vorgesehen ist.

Fig. 1.

*Fig. 2.*

*Fig. 3.*

Fig. 4.